Europäisches Patentamt

**European Patent Office**

Office européen des brevets

(11) Publication number: **0 112 170**
**B1**

(12) **EUROPEAN PATENT SPECIFICATION**

(45) Date of publication of patent specification: **10.08.88**

(51) Int. Cl.⁴: **B 64 D 11/06,** A 47 C 7/70

(21) Application number: **83307630.0**

(22) Date of filing: **15.12.83**

(54) **Vehicle seat with quick release mounting for seat back tray table.**

(30) Priority: **16.12.82 US 450400**

(43) Date of publication of application:
**27.06.84 Bulletin 84/26**

(45) Publication of the grant of the patent:
**10.08.88 Bulletin 88/32**

(84) Designated Contracting States:
**DE FR GB IT**

(56) References cited:
**GB-A-2 051 567**
**US-A-4 159 071**

(73) Proprietor: **PTC Aerospace Inc.**
**Route 202**
**Bantam Connecticut 06750 (US)**

(72) Inventor: **Brennan, Edward Joseph**
**Norfolk Road**
**Litchfield Connecticut 06759 (US)**

(74) Representative: **Newby, John Ross et al**
**J.Y. & G.W. Johnson Furnival House 14/18 High Holborn**
**London WC1V 6DE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to a vehicle seat, and particularly an aircraft passenger seat, of the type having a tray table mounted on legs in the back of the seat. The tray table is pivotally movable between a latched, generally vertical storage position within the seat back and a deployed, generally horizontal use position. Since the seat back of such a seat is typically reclinable, the tray table legs are usually pivotally mounted to the seat frame. Such mounting permits a deployed tray table to remain horizontal regardless of the reclining movement of the seat back. In the usual seat construction, a retaining bolt goes through each table leg, the seat back frame and the seat fore and aft support frame member.

Tray tables are subject to substantial wear and abuse and require frequent replacement. Unfortunately, the conventional mounting constructions require the expenditure of considerable time, the use of a number of special tools, and the disassembly of many parts to replace a tray table. This situation greatly increases maintenance costs.

It would appear to be very advantageous to provide a tray table mounting construction that permits the table to be quickly removed from the seat to facilitate maintenance. However, it would be highly desirable that such a table cannot be removed by an unauthorized person, such as a passenger.

GB-A-2,051,567 discloses an arrangement for mounting a tray table assembly to a seat back which has the spaced apart pair of legs of the tray table assembly clamped at their lower ends over sleeves projecting inwardly from each side frame of the seat. The clamping involves the use of tightening screws or the like which need a tool to release them. Each leg of the tray table assembly is located between the respective side frame of the seat and a seat back support bracket and thus the legs cannot be released from the sleeves that support them by inward deflection of the lower ends of the tray table assembly legs one towards the other.

What constitutes the invention is defined in the following claim 1, the classifying part of which is based on the said GB-A-2,051,567. The characterising part of claim 1 specifies that the legs of the tray table assembly are deflectable towards each other at their lower ends to permit the tray table assembly to be quickly assembled and disassembled without tools from its mounted relationship with the pair of seat frame members by an authorised person.

Suitably a torsion tube joins the spaced legs to increase the rigidity of the tray assembly. In a first disclosed embodiment of the invention, the torsion tube is enclosed within the tray while in a second disclosed embodiment, the torsion tube extends between the lower ends of the table legs.

In the first disclosed embodiment, the lower ends of the table legs include a relatively smaller diameter upper opening joined by a parallel-sided restricted width slot of a smaller dimension to a relatively larger diameter lower opening. Fixed against rotation to each frame member is a pivot stud having a cylindrical outer end portion. Said pivot end portions are interrupted by a pair of opposed parallel flats. The diameter of the cylindrical outer end portion of the stud is the same as the smaller diameter upper opening in the table leg so that the legs can be pivoted about the axis of the stud to move the tray assembly between its storage and use positions. The headed portions of the bolts which hold the pivot studs to the frame members are larger than the cylindrical outer end portions and prevent the legs from being pulled towards each other when the pivot studs are in the smaller upper openings. In all normal positions of the seat back between its forward upright position and its fully reclined position, the parallel flats on the pivot studs are at an angle to the parallel sides of the restricted width slot in the table legs. Thus, in all normal positions of the seat back, it is impossible for the table legs to be lifted so that the studs move through the restricted slots and into the larger openings where the legs can be disassembled from the studs by being deflected toward each other sufficiently to pass oer the heads of the bolts which retain the studs. The latter movement can only take place when the seat back is in a "break-over" position overlying the seat cushion. This position is achieved by applying a substantial forward load to the top of the seat back and the usual passenger is unaware of the fact that the seat back can move forward in this fashion or of the consequence of such a movement. Thus, the tray table is safe from being removed by unauthorized persons, but can easily be removed by authorized persons in a few seconds. Removal is accomplished by simply moving the seat back forward of its normal upright position by applying the required pressure to the seat back and then pivoting the unlatched tray table to the generally vertical position in which the sides of the restricted width slots in the legs are aligned with the parallel flats on the pivot studs. The table legs can then be lifted to align the large openings therein with the heads of the stud retaining bolts and deflected toward each other to clear the bolt heads.

The second disclosed "quick release" construction embodiment is for a tray table whose torsion bar is at the lower ends of its legs. It can be used on a seat back that cannot be moved to a forward "break-over" position, but is slightly easier to operate when the seat back is forward. As noted, the torsion tube which lends rigidity to the table assembly is positioned between the lower ends of the spaced table legs. It is preferably nonrotatably fixed to a first leg, such as by a pin, and keyed to the second leg so that the second leg can be slidably deflected axially of the tube but cannot rotate relative to it. If desired, however, the first leg could be mounted to deflect similarly to the second leg. Pivot bosses or studs on the seat frame members which support the two spaced table legs are axially aligned with each other and are adapted to fit within axially aligned apertures or openings formed in the two legs. A compression spring is preferably positioned inside the torsion tube so that the second leg is normally biased away from the first leg so as to maintain the legs in engagement with the pivot bosses. When the tray table assembly is to be removed from the seat back, the flap of the seat back dress cover, which normally conceals the torsion tube from the seat occupant's view, is detached from the seat and the second leg is then deflected toward the first leg to free the leg from its retaining boss. A transverse pin in the leg and an axial slot in the wall of the torsion tube can be used to cooperate and permit the deflection of the leg along the tube axis without allowing rotation. Since the usual seat occupant is not aware of either the fact that the dress cover conceals a torsion tube or the procedure for removing the dress cover and releasing the connection between the tube and table leg, it follows that the quick release connection feature is quite esoteric and operable only by authorized persons.

Two embodiments of aircraft passenger seat in accordance with the invention will now be described, by way of example, with reference to the accompanying drawings, in which:-

Figure 1 is a partially broken-away perspective view of a first embodiment of multi-passenger aircraft seat in accordance with the invention with the left seat shown in its normal upright position with its tray table deployed, and the right seat shown with its back in its "break-over" position and with its tray table rotated to the particular forward angle at which it can be quickly released from its mountings;

Figure 2 is a fragmentary side view showing the relationship of the lower end of one of the legs of the tray table of the seat of Figure 1 relative to its pivot axis and a stop bracket when the tray table is stored and the seat back is in its normal upright position;

Figure 3 is a fragmentary side view similar to Figure 2, but showing the leg of the tray table when the tray table is in its fully deployed use position;

Figure 4 is a fragmentary side view similar to Figure 2, but showing the leg of the tray table rotated forward of its normal forward upright position and lifted relative to its pivot axis so that it can be deflected sideways and released from its mountings;

Figure 5 is a fragmentary rear view showing the leg of the table and associated elements in their Figure 4 position in solid lines;

Figure 6 is a fragmentary, exploded, perspective view showing the table leg mounting elements of Figures 1-5 and their relationship to a portion of the seat frame.

Figure 7 shows a partially broken-away perspective view of a second embodiment of vehicle seat in accordance with the invention;

Figure 8 is an enlarged fragmentary perspective view of a leg of the tray table of the seat shown in Figure 7; and

Figure 9 is a rear view of the leg of the tray table and its mounting assembly in the seat of Figures 7 and 8 with the table leg shown in dotted lines in the position it assumes when it is deflected to its disassembly position.

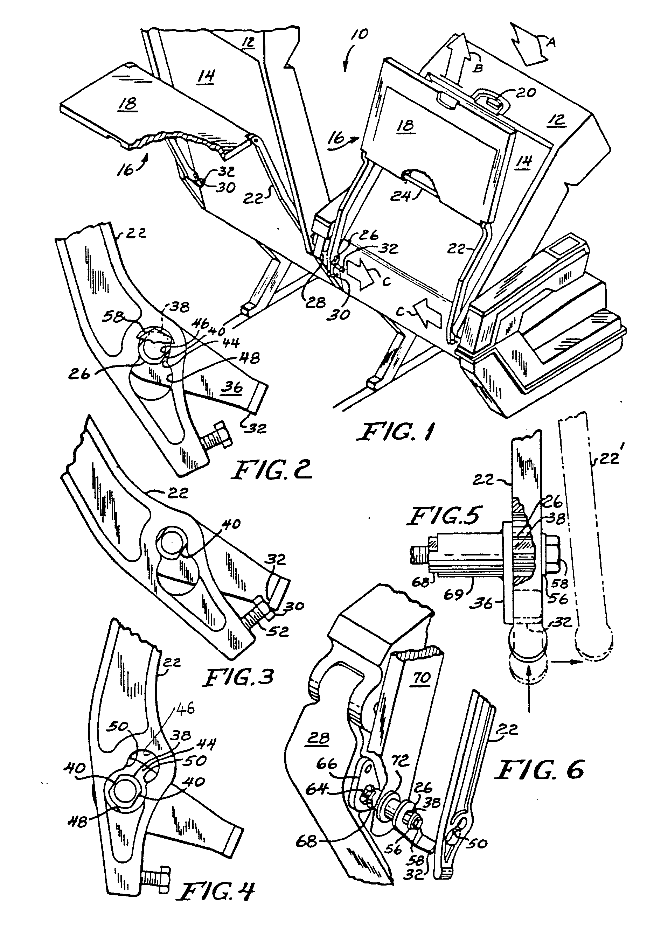

Referring to the drawings, Figure 1 shows a multi-passenger seating unit indicated generally at 10 which incorporates a quickly releasable tray table mounting mechanism. The seating unit 10 includes a plurality of seat backs 12 each having a recess 14 in its rear surface into which a tray table assembly 16 is adapted to be stored when not in use. Each tray table assembly 16 includes a tray table 18 which is retained in the respective seat back recess 14 in a storage mode by means of a fastener 20. Each tray table 18 is pivotally supported on a pair of table legs 22 between which a torsion tube 24 is mounted. The torsion tube ensures that the relatively light weight table assembly 16 will not be damaged should an extraordinarily heavy load be applied to one side of it. The table legs 22 are pivotally mounted on pivot studs 26 which are non-rotatably mounted on fixed frame members 28. The use position of the tray table 18 is shown in the left-hand portion of Figure 1 and is determined by the position of the table 18 when contact is made between cooperating stop members 30, 32, on the legs 22 and frame members 28, respectively.

The quick release mechanism can be seen much more clearly in Figures 2 to 6. In these Figures, the frame mounted stop member 32 can be seen to be a flange portion which is bent at right angles to the body of a bracket member 36 which is welded to the pivot stud 26. The pivot stud 26 includes a cylindrical bearing portion 38 and a pair of parallel flats 40 cut into said cylindrical portion. The fixed pivot stud is adapted to move relative to an elongate slot 44 which is formed in the lower end of each leg 22. The slot 44 has a smaller diameter upper end bearing portion 46 which is joined to a larger diameter lower end portion 48 by a pair of parallel flat connection portions 50 (see Figure 4) which provide a restriction between the larger and smaller ends of the slot 44. The distance between the parallel flat portions 50 is just sufficient to accommodate the dimension of the pivot stud 26 between its flats 40 when all the parallel portions are in line with each other as hereinafter described.

At the lower end of each leg 22, a threaded bolt 52 is mounted for adjusting the angle of the table legs when the tray table assembly 16 is in its use position shown at the left side of Figure 1. The head of the bolt 52 comprises the aforementioned stop member 30 which engages the already-discussed stop member 32. The pivot stud 26 which supports the tray table legs 22 is anchored to the frame member 28 of the seat by means of a washer 56 which bears on the periphery of the smaller diameter slot end portion 46 and by a through bolt 58 which passes through the frame member 28 and is retained by a nut (not shown). Rotation of the pivot stud 26 must be prevented to cause the bracket member 36 to remain fixed in space. Rotation is prevented by a pair of flats 64 formed on a plate 66 which is fixed such as by a rivet, to the frame member 28. The flats 64 on the plate 66 are engaged by a complementary pair of flats 68 (see Figure 5) on the inner end of the pivot stud 26 in order to prevent its rotation. The cylindrical intermediate portion 69 of the pivot stud between the flats 68 and the cylindrical bearing portion 38 is adapted to be received within a bush 72 which pivotally supports seat back support legs 70.

The operation of the aforementioned quick release mechanism can be briefly summarized as follows: As indicated by the arrows "A", "B" and "C" in Figure 1, the seat back 12 is first pushed angularly forward with a force of at least about 15 kg (35 pounds) to its "breakover" position or at least well beyond the normal forward upright seating position shown at the left in Figure 1. The tray table assembly 16 is unlocked from its fastener 20 and is rotated slightly rearwardly of its "break-over" position, as shown in Figure 1, until the legs 22 reach the angle shown in Figure 4. In this position, the parallel flat portions 50 in the slot 44 on each side of the seat are aligned with the parallel flats 40 on the respective pivot stud 26 so that the tray assembly 16 can then be lifted as indicated by the arrow "B", to bring the larger diameter portion 48 up toward the bearing portion 38 of the pivot stud 26. In this position, which is shown in solid lines in Figure 5, the legs 22 can be deflected toward each other as indicated by arrows "C" in Figure 1. As the legs are deflected inwardly, the larger diameter portion 48 of the slot 44 will clear the washer 56 and the bolt 58, as shown in dotted lines at 22' in Figure 5, causing the table assembly 16 to come free of the seat back 12. To replace a tray table assembly 16, the preceding steps are simply followed in the reverse order.

Using the aforementioned procedures, it is obvious that the entire process of removing or replacing a tray table assembly 16 takes only a few seconds and requires no tools. Since the distance between the parallel flat portions 50 in the table leg slot 44 is less than the diameter of the cylindrical bearing portion 38 of the pivot stud 26, it is obvious that a table assembly can not be removed from a seat back in any of the normal positions of the seat back 12 between its upright position and its fully reclined position. Only when the seat is moved to its "break-over" Figure 4 position can the table assembly 16 be lifted relative to the pivot studs 26. As previously discussed, a passenger would not normally know of the "break-over" position (which requires a substantial force to be applied to the seat back), and thus cannot remove the tray table assembly.

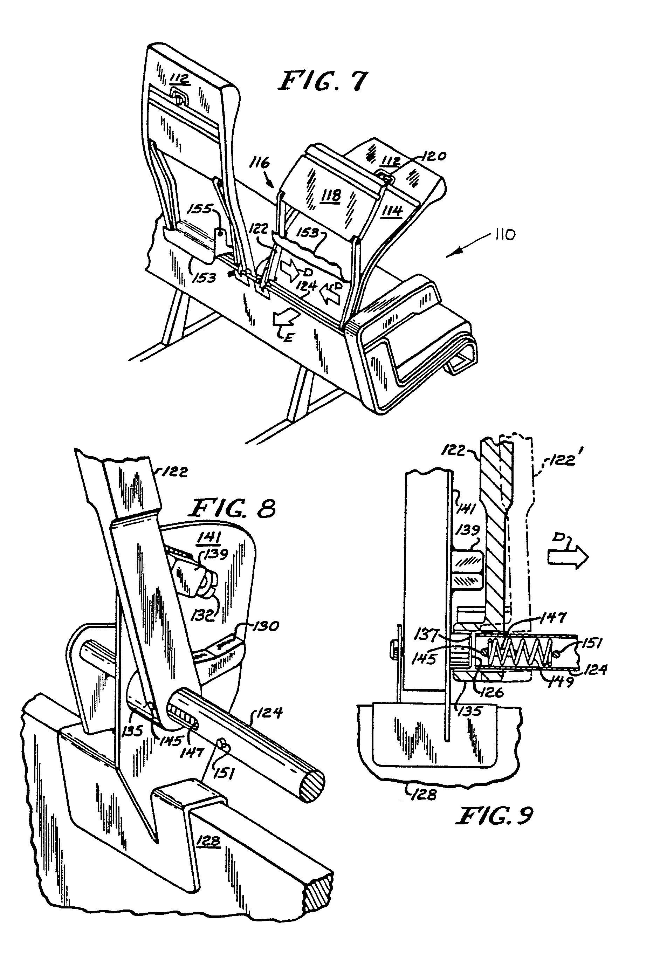

A second embodiment of vehicle seat in accordance with the invention is shown in Figures 7 to 9 and, for convenience, the same numbering system has been used in these Figures as was used in Figures 1 to 6, with the addition of one hundred.

The second embodiment of the invention shown in Figures 7 to 9 illustrates a modified form of quickly releasable tray table assembly 116 which has a torsion bar 124 positioned at the lower ends of the table legs 122 rather than internally of the table 118. Although one of the seat backs 112 on the seating unit 110 is shown as being pushed forward to its "break-over" position, the table release assembly can actually be released when the seat back 112 is in its forward upright position as shown at the left side of Figure 7.

The tray table legs 122 have axially aligned elongate portions 135 at their lower ends (Figures 8 and 9) which include a hollow cylindrical interior bearing surface 137 which is adapted to engage both the pivot stud 126 and the end portion of the torsion tube 124, as shown in solid lines in Figure 9. The legs 122 can pivot about the respective pivot stud 126 within a limited range but are retained in a predetermined angular position when the tray table 118 is deployed for use. This latter position is the position at which the stop member 130 which is integral with the elongate portion 135, contacts the stop member 132. The stop member 132 is shown in Figure 8 as a screw head which can be adjustably positioned in a block 139 on a vertical metal bracket 141 which is fixedly mounted to the seat frame member 128. A pin 145 is mounted to pass completely through the elongate portion 135 and through elongate slots 147 in the torsion tube 124. The pin and slot connection permits axial movement of the portion 135 relative to the tube 124, while preventing relative rotational movement. Thus, the table legs 122 can be moved towards each other in the direction of the arrows "D" in Figures 7 and 9 to uncouple the portions 135 from the pivot studs 126. The opposite end of the torsion tube 124 is preferably fixed relative to the other leg of the tray table assembly, such as by a pin (not shown) similar to the pin 145. However, no slot 147 would be required, since one slot can provide the necessary amount of deflection of the legs. When the legs have been moved to their deflected position 122' shown in Figure 9, the entire table assembly 116 can be moved away from the seat back 112 as indicated by the arrow "E" in Figure 7. The legs 122 are normally biased to their engaged position with the pivot studs 126 by a compression spring 149 which is compressed between the pin 145 on the leg and a pin 151 which is mounted in the walls of the tube 124.

In order to prevent the tray table assembly 116 from being released by an unauthorized person, such as a passenger, the upholstered seat back dress cover 153 can be cut and formed so that it covers the torsion tube 124 and the slot 147. Hidden fastening means 155 on the lower and side edges of the dress cover 153 permit the cover to be lifted by authorized persons in order to permit the legs 122 to be deflected inwardly from the pivot studs 126.

## Claims

1. A vehicle seat (10:110) having a seat back (12:112) mounted tray table assembly (16:116) which may be assembled and disassembled from a mounted relationship with a pair of seat frame members (28:128, 141) located adjacent the opposed side edges of a seat back (12:112) which tray table assembly (16:116) includes a tray table (18:118) and a pair of spaced, downwardly extending legs (22:122) pivoted thereto, said seat (10:110) comprising a pair of axially aligned pivot studs (26:126) mounted on the seat frame members (28:128, 141), said pair of pivot studs (26:126) forming a pivot axis for said pair of legs (22:122) and cooperating with a pivot aperture or opening (44:137) formed in each of said legs (22:122) to mount said legs (22:122); stop means (32:132) on said seat frame members (28:128, 141) for limiting the outward pivotal movement of said legs (22:122) away from said seat back (12:112) when said tray table (18:118) is deployed from its generally vertical storage position in the seat back (12:112) to a generally horizontal use position; and means (40, 46, 48, 50:153, 155) mounted on said seat (10:110) for preventing unauthorized disassembly of said legs (22:122) from said pair of pivot studs (26:126), characterised in that said legs (22:122) are deflectable towards each other at their lower ends to permit the tray table assembly (16:116) to be quickly assembled and disassembled without tools from its mounted relationship with the pair of seat frame members (28:128, 141) by an authorised person.

2. A vehicle seat as claimed in claim 1, characterised in that each said pivot stud (26) is non-rotatably affixed to a frame member (28, 36) and includes a generally cylindrical portion (38) adjacent its outer end which provides a bearing surface for engaging a complementary bearing surface (46) in said leg (22) when said tray table (18) is moved between its normal storage and use positions, each said bearing surface (46) being formed at one end of an elongate slot (44), said elongate slot (44) having a relatively smaller diameter aperture (46) which defines said complementary bearing surface at one of its ends and a relatively larger diameter aperture (48) at the other of its ends, said apertures (46, 48) being connected by a restricted width portion which is defined by opposed parallel wall portions (50) which are separated by a distance which is less than the diameter of said relatively smaller diameter aperture (46), each pivot stud (26) having a pair of opposed parallel flats (40) formed thereon which interrupt said generally cylindrical portion (38), said parallel flats (40) on each pivot stud (26) being spaced from each other by a dimension which is sufficiently large as to allow said stud (26) to be moved between the wall portions (50) defining the restricted width slot portions in the respective leg (22) only when said leg (22) is in a predetermined angular position wherein the parallel wall portions (50) of the slot (44) are parallel to the parallel flats (40) on the stud (26).

3. A vehicle seat as claimed in claim 2, characterised in that said pivot studs (26) each have an enlarged diameter element (56, 58) at its outer end which prevents the deflection of said legs (22) towards each other except when said legs (22) and said elongate slots (44) therein have been lifted relative to said pivot studs (26) to cause said pivot studs (26) to become aligned with said relatively larger diameter apertures (48).

4. A vehicle seat as claimed in claim 3, characterised in that said enlarged diameter element (56, 58) comprises the head (58) of a bolt.

5. A vehicle seat as claimed in any of claims 2 to 4, characterised in that said predetermined angular position can only be achieved by forcibly moving the seat back (12) to a position substantially forward of its normal forward upright position.

6. A vehicle seat as claimed in any of claims 2 to 5, characterised in that said stop means on said frame (28) comprises a bracket member (36) fixedly attached to each of said pivot studs (26), said pivot studs (26) being nonrotatably attached to said seat frame members (28), each of said bracket members (36) being engageable by the head of a threaded fastener which is adjustably positioned in a leg (22) of the tray table assembly (16).

7. A vehicle seat as claimed in claim 1, characterised in that a torsion tube (124) is positioned at the lower ends of said legs (122) and in axial alignment with said pair of pivot studs (126), one of said pair of legs (122) having a hollow elongate portion (135) at its lower end which includes an interior cylindrical bearing surface (137) which engages both the torsion tube (124) and one of said pivot studs (126) when the table assembly (116) is in its use position but is slidable axially of said torsion tube (124) and out of engagement with said one of said pivot studs (126) when said legs (122) are deflected toward each other.

8. A vehicle seat as claimed in claim 7, characterised in that a compression spring (149) inside said torsion tube (124) normally biases said legs (122) away from each other and into engagement with said pivot studs (126).

9. A vehicle seat as claimed in claim 8, characterised in that a pin (145) is fixedly mounted in said leg (122) so as to pass completely through said hollow elongate portion (135) of said leg (122), said pin (145) passing through an axial slot (147) in said torsion tube (124) to permit a limited amount of relative axial movement between said leg (122) and tube (124) while preventing relative rotational movement.

10. A vehicle seat as claimed in claim 1, 7, 8 or 9, characterised in that a dress cover (153) is detachably attached to the back of said seat back (112) so that said torsion tube (124) is covered when said dress cover (153) is attached and uncovered when it is detached.

11. A vehicle seat as claimed in any of claims 7 to 10, characterised in that said stop means comprises an adjustable length threaded fastener (132) mounted for movement on a bracket (141) attached to a seat frame member (128), the end of said fastener (132) being engageable by an arm (130) extending radially outwardly of said hollow elongate portion (135) of said leg (122).

## Patentansprüche

1. Fahrzeugsitz (10:110) mit einer an der Sitzrückseite (12:112) montierten tablettförmigen Ablagetischeinheit (16:116), die sich an zwei Sitzrahmenelementen (28:128, 141), die in der Nähe der gegenüberliegenden Seitenkanten einer Sitzrückseite (12:112) angeordnet sind, befestigen bzw. davon lösen läßt, wobei diese tablettförmige Ablagetischeinheit (16:116) einen tablettförmigen Tisch (18:118) und zwei mit Abstand angeordnete, nach unten verlaufende und daran schwenkbar befestigte Stützen (22:122) umfaßt, wobei der genannte Sitz (10:110) umfaßt: zwei achsial ausgerichtete Bolzen (26:126), die an den Sitzrahmenelementen (28:128, 141) befestigt sind, wobei die genannten beiden Bolzen (26:126) eine Schwenkachse für die genannten beiden Stützen (22:122) bilden und mit einem Schwenkausschnitt oder einer Schwenköffnung (44:137) zusammenwirken, die in jeder der genannten Stützen (22:122) ausgebildet ist, um so die genannten Stützen (22:122) montieren zu können; Anschlagvorrichtungen (3:132) an den genannten Sitzrahmenelementen (28:128, 141), um die Schwenkbewegung der genannten Stützen (22:122) zu begrenzen, die von der genannten Sitzrückseite (12:112) aus dann nach außen hin erfolgt, wenn der genannte tablettförmige Tisch (18:118) aus seiner im allgemeinen vertikalen Ruheposition aus der Sitzrückseite (12:112) heraus in eine im allgemeinen horizontale Benutzungsposition gezogen wird; sowie Vorrichtungen (40, 46, 48, 50:153, 155), die am genannten Sitz (10:110) montiert sind, um ein unbefugtes Herausnehmen der genannten Stützen (22:122) aus den genannten beiden Bolzen (26:126) zu verhindern, dadurch gekennzeichnet, daß die genannten Stützen (22:122) an ihren unteren Enden im Verhältnis zueinander zusammengeschoben werden können, um es so einer befugten Person zu ermöglichen, die tablettförmige Ablagetischeinheit (16:116) ohne Werkzeugeinsatz an den beiden Sitzrahmenelementen (28:128, 141) zu befestigen bzw. davon zu lösen.

2. Fahrzeugsitz gemäß Anspruch 1, dadurch gekennzeichnet, daß jeder genannte Bolzen (26) in nicht drehbarer Ausführung an einem Rahmenelement (28, 36) befestigt ist und einen im allgemeinen zylindrischen Abschnitt (38) in der Nähe seines äußeren Endes umfaßt, um so dann eine Lagerfläche für den Eingriff einer Gegenlagerfläche (46) in der genannten Stütze (22) zu haben, wenn der genannte tablettförmige Tisch (18) zwischen seinen normalen Ruhe- und Benutzungspositionen bewegt wird, wobei jede genannte Lagerfläche (46) an einem Ende aus einem länglichen Schlitz (44) besteht, wobei der genannte längliche Schlitz (44) eine einen relativ kleineren Durchmesser aufweisende Öffnung (46), die die genannte Gegenlagerfläche an einem seiner Enden festlegt, und eine einen relativ größeren Durchmesser aufweisende Öffnung (48) am anderen seiner Enden besitzt, wobei die genannten Öffnungen (46, 48) über einen eine geringere Breite aufweisenden Abschnitt verbunden sind, der von gegenüberliegenden, parallel verlaufenden Wandabschnitten (50) festgelegt ist, die um einen Abstand voneinander entfernt sind, der geringer als der Durchmesser der genannten, einen relativ kleineren Durchmesser aufweisenden Öffnung (46) ist, wobei jeder Bolzen (26) zwei gegenüberliegende, parallel verlaufende und darin ausgebildete Flachabschnitte (40) aufweist, die den genannten, im allgemeinen zylindrischen Abschnitt (38) unterbrechen, wobei die genannten parallel verlaufenden Flachabschnitte (40) an jedem Bolzen (26) einen Abstand voneinander aufweisen, der ausreichend groß ist, damit der genannte Bolzen (26) zwischen den Wandabschnitten (50) bewegt werden kann, wodurch die eine geringere Breite aufweisende Schlitzabschnitte in der entsprechenden Stütze (22) nur dann festgelegt sind, wenn sich die genannte Stütze (22) in einer vorbestimmten Winkelposition befindet, wobei die parallelen Wandabschnitte (50) des Schlitzes (44) zu den parallelen Flachaschnitten (40) am Bolzen (26) parallel verlaufen.

3. Fahrzeugsitz gemäß Anspruch 2, dadurch gekennzeichnet, daß die genannten Bolzen (26) jeweils ein einen größeren Durchmesser aufweisendes Element (56, 58) an seinem äußeren Ende besitzen, wodurch ein Zusammenschieben der genannten Stützen (22) im Verhältnis zueinander verhindert wird, es sei denn, daß die genannten Stützen (22) und die genannten, darin ausgebildeten länglichen Schlitze (44) im Verhältnis zu den genannten Bolzen (26) angehoben werden, um dadurch zu bewirken, daß die genannten Bolzen (26) im Verhältnis zu den genannten, einen relativ größeren Durchmesser aufweisenden Öffnungen (48) entsprechend ausgerichtet werden.

4. Fahrzeugsitz gemäß Anspruch 3, dadurch gekennzeichnet, daß das genannte, einen größeren Durchmesser aufweisende Element (56, 58) den Kopf (58) eines Bolzens umfaßt.

5. Fahrzeugsitz gemäß irgendeinem der Ansprüche 2 bis 4, dadurch gekennzeichnet, daß die genannte vorbestimmte Winkelposition nur dadurch erreicht werden kann, daß die Sitzrückseite (12) in eine Stellung gedrückt wird, die im wesentlichen vor ihrer normalen, vorderen und aufrechten Position liegt.

6. Fahrzeugsitz gemäß irgendeinem der Ansprüche 2 bis 5, dadurch gekennzeichnet, daß die genannte Anschlagvorrichtung am genannten Rahmen (28) ein Konsolenelement (36) umfaßt, das fest mit jedem der genannten Bolzen (26) verbunden ist, wobei die genannten Bolzen (26) in nicht drehbarer Ausführung an den genannten Sitzrahmenelementen (28) befestigt sind, wobei in jedes der genannten Konsolenelemente (36) der Kopf eines mit Gewinde ausgestatteten Befestigungselements eingreifen kann, das in einer Stütze (22) der tablettförmigen Ablagetischeinheit (16) in einstellbarer Ausführung angeordnet ist.

7. Fahrzeugsitz gemäß Anspruch 1, dadurch gekennzeichnet, daß ein Biegerohr (124) an den unteren Enden der genannten Stützen (122) angeordnet und achsial zu den genannten beiden Bolzen (126) ausgerichtet ist, wobei eine der genannten beiden Stützen (122) einen länglichen Hohlabschnitt (135) an ihrem unteren Ende aufweist, der eine innenliegende zylindrische Lagerfläche (137) umfaßt, die dann sowohl in das Biegerohr(124) als auch in einen der genannten Bolzen (126) eingreift, wenn sich die Tischeinheit (116) zwar in ihrer Benutzungsposition befindet, sich jedoch achsial zum genannten Biegerohr (124) und aus dem Eingriff mit dem genannten einen der genannten Bolzen (126) heraus dann verschieben läßt, wenn die genannten Stützen (122) im Verhältnis zueinander zusammengeschoben sind.

8. Fahrzeugsitz gemäß Anspruch 7, dadurch gekennzeichnet, daß eine Druckfeder (149) im Innern des genannten Biegerohrs (124) normalerweise dafür sorgt, daß die genannten Stützen (122) im Verhältnis zueinander nach außen und in Eingriff mit den genannten Bolzen (126) gedrückt werden.

9. Fahrzeugsitz gemäß Anspruch 8, dadurch gekennzeichnet, daß ein Stift (145) fest in der genannten Stütze (122) montiert ist, so daß er vollständig durch den genannten länglichen Hohlabschnitt (135) der genannten Stütze (122) verläuft, wobei sich der genannte Stift (145) durch einen achsialen Schlitz (147) des genannten Biegerohrs (124) erstreckt, um so in begrenztem Umfang eine relative achsiale Bewegung zwischen der genannten Stütze (122) und dem Rohr (124) zu ermöglichen, während er gleichzeitig eine relative Drehbewegung unterbindet.

10. Fahrzeugsitz gemäß Anspruch 1, 7, 8 oder 9, dadurch gekennzeichnet, daß eine Abdeckung (153) in abnehmbarer Ausführung hinten an der Sitzrückseite (112) befestigt ist, so daß das genannte Biegerohr (124) bei erfolgter Befestigung der genannten Abdeckung (153) verdeckt und bei abgenommener Abdeckung sichtbar ist.

11. Fahrzeugsitz gemäß irgendeinem der Ansprüche 7 bis 10, gadurch gekennzeichnet, daß die genannte Anschlagvorrichtung ein mit Gewinde ausgestattetes, längenverstellbares Befestigungselement (132) umfaßt, das zur Durchführung einer Bewegung an einer Konsole (141) montiert ist, die an einem Sitzrahmenelement (128) befestigt ist, wobei in das Ende des genannten Befestigungselements (132) ein Arm (130) eingreifen kann, der radial nach außen im Verhältnis zum genannten länglichen Hohlabschnitt (135) der genannten Stütze (122) verläuft.

## Revendications

1. Siège de véhicule (10:ll0) ayant, monté sur un dossier de siège (12:112), un ensemble de tablette à plateau (16:116) qui peut être posé et déposé d'une position de montage avec une paire d'éléments (28:128, 141) de châssis du siège situés au voisinage des bords latéraux opposés d'un dossier de siège (12:112), lequel ensemble, de tablette à plateau (16;116) comprend une tablette à plateau (18:118) et une paire de bras espacés (22:122), s'étendant vers le bas et articulés à celle-ci, ledit siège (10:110) comprenant une paire de pivots d'articulation (26:126) axialement alignés montés sur les éléments (28;128, 141) de châssis du siège, ladite paire de pivots d'articulation (26;126) formant un axe d'articulation pour ladite paire de bras (22:122) et coopérant avec une ouverture ou trou d'articulation (44:137) formée dans chacun desdits bras (22;122) pour monter lesdits, bras (22:122); des moyens d'arrêt (32:132) sur lesdits éléments (28:128, 141) de châssis du siège pour limiter le mouvement de rotation desdits bras (22:122) vers l'extérieur en s'écartant dudit dossier du siège (12:112) lorsque ladite tablette à plateau (18:118) est déployée de sa position de rangement généralement verticale dans le dossier de siège (12:112) jusqu'à une position d'utilisation généralement horizontale; et des moyens (40, 46, 48, 50: 153, 155) montés sur ledit siège (10:110) pour empêcher un démontage non autorisé desdits bras (22:122) de ladite paire de pivots d'articulation (26:126), caractérisé en ce que lesdits bras (22:122) sont flexibles en direction l'un de l'autre à leurs extrémités inférieures pour permettre à l'ensemble de tablette à plateau (16:116) d'être rapidement posé et déposé sans outils de sa position de montage avec la paire d'éléments (28:128, 141) de châssis du siège, par une personne autorisée.

2. Siège de véhicule suivant la revendication 1, caractérisé en ce que chacun desdits pivots d'articulation (26) est fixé de manière non rotative à un élément de châssis (28, 36) et comprend une portion (38) gènéralement cylindrique voisine de son extrémité extérieure, qui procure une portée pour attaquer une portée complémentaire (46) dans ledit bras (22) lorsque ladite tablette à plateau (18) est déplacée entre sa position normale de rangement et sa position d'utilisation, chacune desdites portées (46) étant formée à une extrémitè d'une fente allongée (44), ladite fente allongée (44) ayant une ouverture (46) de diamètre relativement plus petit qui définit ladite portée complémentaire à une de ses extrémités et une ouverture (48) de diamètre relativement plus grand à l'autre de ses extrémités, lesdites ouvertures (46, 48) étant reliées par une portion de largeur réduite qui est définie par des portions de paroi parallèles opposées (50) qui sont séparées par une distance qui est inférieure au diamètre de ladite ouverture (46) de diamètre relativement plus petit, chaque pivot d'articulation (26) portant une paire de plats (40) parallèles opposés qui interrompent ladite portion (38) généralement cylindrique, lesdits plats parallèles (40) sur chaque pivot d'articulation (26) étant espacés l'un de l'autre d'une distance qui est suffisamment grande pour permettre que ledit pivot (26) soit déplacé entre les portions de paroi (50) délimitant les portions de fente de largeur réduite dans le bras (22) respectif uniquement lorsque ledit bras (22) se trouve dans une position angulaire prédéterminée dans laquelle les portions de paroi (50) parallèles de la fente (44) sont parallèles aux plats (40) parallèles formés sur le pivot (26).

3. Siège de véhicule suivant la revendication 2, caractérisé en ce que lesdits pivots d'articulation (26) comportent chacun un élément de plus grand diamètre (56, 58) à leur extrémité extérieure, qui empêche la flexion desdits bras (22) l'un vers l'autre excepté lorsque lesdits bras (22) et lesdites fentes allongées (44) ménagées dans ceux-ci ont été soulevés par rapport auxdits pivots d'articulation (26) pour amener lesdits pivots d'articulation (26) à être alignés avec lesdites ouvertures (48) de diamètre relativement plus grand.

4. Siège de véhicule suivant la revendication 3, caractérisé en ce que ledit élément de plus grand diamètre (56, 58) comprend la tête (58) d'un boulon.

5. Siège de véhicule suivant l'une ou l'autre des revendications 2 à 4, caractérisé en ce que ladite position angulaire prédéterminée ne peut être atteinte qu'en obligeant le dossier de siège (12) à se déplacer jusque dans une position située substantiellement en avant de sa position redressée normale.

6. Siège de véhicule suivant l'une ou l'autre des revendications 2 à 5, caractérisé en ce que lesdits moyens d'arrêt sur ledit châssis (28) comprennent un élément de patte (36) fixement attaché à chacun desdits pivots d'articulation (26), lesdits pivots d'articulation (26) étant fixés de manière non rotative auxdits éléments (28) de châssis du siège, chacun desdits éléments de patte (36) pouvant être attaqué par la tête d'un organe de fixation fileté qui est positionné de manière réglable dans un bras (22) de l'ensemble de tablette à plateau (16).

7. Siège de véhicule suivant la revendication 1, caractérisé' en ce qu'un tube de torsion (124) est positionné aux extrémités inférieures desdits bras (122) et en alignement axial avec ladite paire de pivots d'articulation (126), un des bras (122) de ladite paire ayant une portion allongée creuse (135) à son extrémité inférieure, qui comprend une surface d'appui cylindrique intérieure (137) qui touche tant le tube de torsion (124) que l'un des pivots d'articulation (126) lorsque l'ensemble de tablette à plateau (116) se trouve dans sa position d'utilisation mais peut coulisser axialement par rapport audit tube de torsion (124) et rompre le contact avec ledit pivot d'articulation (126) lorsque lesdits bras (122) sont fléchis l'un vers l'autre.

8. Siège de véhicule suivant la revendication 7, caractérisé en ce qu'un ressort de compression (149) placé à l'intérieur dudit tube de torsion (124) écarte normalement lesdits bras (122) l'un de l'autre et les applique sur lesdits pivots d'articulation (126).

9. Siège de véhicule suivant la revendication 8, caractérisé en ce qu'une broche (145) est fixement montée dans ledit bras (122) de façon à passer complètement à travers ladite portion allongée creuse (135) dudit bras (122), ladite broche (145) passant à travers une fente axiale (147) dans ledit tube de torsion (124) pour autoriser un degré limité de mouvement axial relatif entre ledit bras (122) et ledit tube (124) tout en empêchant tout mouvement relatif de rotation.

10. Siège de véhicule suivant la revendication 1, 7, 8 ou 9 caractérisé en ce qu'une housse (153) amovible est attachée à l'arrière dudit dossier de siège (112) de sorte que ledit tube de torsion (124) soit couvert lorsque ladite housse (153) est attachée et découvert lorsqu'elle est détachée.

11. Siège de véhicule suivant l'une ou l'autre des revendications 7 à 10, caractérisé en ce que lesdits moyens d'arrêt comprennent un organe de fixation fileté (132) de longueur réglable monté de façon à se mouvoir sur un gousset (141) attaché à un élément (128) de châssis du siège, l'extrémité dudit organe de fixation (132) pouvant être attaquée par un bras (130) s'étendant radialement vers l'extérieur de ladite portion allongèe creuse (135) dudit bras (122).

FIG. 1

FIG. 2

FIG. 3

FIG. 4

FIG. 5

FIG. 6

FIG. 7

FIG. 8

FIG. 9